(19) Europäisches Patentamt
European Patent Office
Office européen des brevets

(11) **EP 3 871 148 B1**

(12) **EUROPEAN PATENT SPECIFICATION**

(45) Date of publication and mention
of the grant of the patent:
**02.04.2025 Bulletin 2025/14**

(21) Application number: **19827622.2**

(22) Date of filing: **25.11.2019**

(51) International Patent Classification (IPC):
**G06V 10/82** *(2022.01)*      **G06V 10/44** *(2022.01)*
**G06N 3/08** *(2023.01)*      **G06N 3/045** *(2023.01)*

(52) Cooperative Patent Classification (CPC):
**G06N 3/08; G06N 3/045; G06V 10/454;**
**G06V 10/82;** G06T 2207/20081; G06T 2207/20084

(86) International application number:
**PCT/EP2019/000320**

(87) International publication number:
**WO 2020/108785 (04.06.2020 Gazette 2020/23)**

(54) **METHOD AND DEVICE FOR TRAINING A NEURAL NETWORK TO SPECIFY LANDMARKS ON 2D AND 3D IMAGES**

VERFAHREN UND VORRICHTUNG ZUM TRAINIEREN EINES NEURONALEN NETZES ZUR ANGABE VON REFERENZPUNKTEN AUF 2D- UND 3D-BILDERN

PROCÉDÉ ET DISPOSITIF D'APPRENTISSAGE D'UN RÉSEAU NEURONAL POUR SPÉCIFIER DES POINTS DE REPÈRE SUR DES IMAGES 2D ET 3D

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.11.2018 DE 102018009345**

(43) Date of publication of application:
**01.09.2021 Bulletin 2021/35**

(73) Proprietor: **Cellmatiq GMBH**
**20457 Hamburg (DE)**

(72) Inventors:
• **BLAHA, Jaroslav**
**20457 Hamburg (DE)**
• **WALDRAFF, Tassilo**
**20457 Hamburg (DE)**

(74) Representative: **Heeschen Pültz Patentanwälte PartGmbB**
**Postfach 60 10 61**
**22210 Hamburg (DE)**

(56) References cited:
• ZHANG YANAN ET AL: "Face detection based on multi task learning and multi layer feature fusion", 2017 6TH INTERNATIONAL CONFERENCE ON COMPUTER SCIENCE AND NETWORK TECHNOLOGY (ICCSNT), IEEE, 21 October 2017 (2017-10-21), pages 289 - 293, XP033333378, DOI: 10.1109/ICCSNT.2017.8343704
• LAI HANJIANG ET AL: "Deep Recurrent Regression for Facial Landmark Detection", IEEE TRANSACTIONS ON CIRCUITS AND SYSTEMS FOR VIDEO TECHNOLOGY, INSTITUTE OF ELECTRICAL AND ELECTRONICS ENGINEERS, US, vol. 28, no. 5, 1 May 2018 (2018-05-01), pages 1144 - 1157, XP011683050, ISSN: 1051-8215, [retrieved on 20180503], DOI: 10.1109/TCSVT.2016.2645723
• XU ZHOUBING ET AL: "Less is More: Simultaneous View Classification and Landmark Detection for Abdominal Ultrasound Images", 26 September 2018, ROBOCUP 2008: ROBOCUP 2008: ROBOT SOCCER WORLD CUP XII; [LECTURE NOTES IN COMPUTER SCIENCE; LECT.NOTES COMPUTER], SPRINGER INTERNATIONAL PUBLISHING, CHAM, PAGE(S) 711 - 719, ISBN: 978-3-319-10403-4, XP047495992

**Description**

**FIELD OF THE INVENTION**

The present invention generally relates to two-dimensional or three-dimensional image data and in particular how to specify landmarks therein by the calculation of presence, position and precision values.

**BACKGROUND OF THE INVENTION**

The following discussion of the prior art is intended to facilitate an understanding of the invention and to enable the advantages of it to be more fully understood. It should be appreciated, however, that any reference to prior art throughout the specification should not be construed as an express or implied admission that such prior art is widely known or forms part of common general knowledge in the field.

The recognition and positioning of landmarks on images is an important task in many fields. Often such recognition and positioning of landmarks is performed manually or semi-automatically. Computer-aided systems for automatically recognizing and positioning landmarks on images are, due to its complexity and variety, one of many areas of the computer vision discipline, which requires continuous adaptations and improvements.

Machine learning with deep neural networks is driving the development of computer vision, bringing greater speed and accuracy to tasks such as image landmark positioning. On the strength of this growth, technical solutions across a wide range of sectors (e.g. healthcare, quality control) are putting image processing applications to work to improve existing processes and automate human-driven tasks.

In itself the general training of neural networks is well-known, whereas the training of neural networks for landmark positioning is a process with significant improvement potential. From previous methods, when training neural networks for landmark positioning, no information is provided on the presence of the landmarks, nor are there any indications as to the precision of the landmarks' positioning. In particular, a value for the precision of the landmarks is important in some use cases in order to be able to initiate optimization or correction processes. It is common practise to do landmark positioning with neural networks, whereby the presence of landmarks is assumed or verified beforehand.

Prior art is known from:

- ZHANG YANAN ET AL:"Face detection based on multi task learning and multi layer feature fusion", 2017 6TH INTERNATIONAL CONFERENCE ON COMPUTER SCIENCE AND NETWORK TECHNOLOGY (ICCSNT), IEEE, 21 October 2017 (2017-10-21), pages 289-293, DOI: 10.1109/ ICCSNT.2017.8343704,
- LAI HANJIANG ET AL: "Deep Recurrent Regression for Facial Landmark Detection", IEEE TRANSACTIONS ON CIRCUITS AND SYSTEMS FOR VIDEO TECHNOLOGY, vol. 28, no. 5, 1 May 2018 (2018-05-01), pages 1144-1157, ISSN: 1051-8215, DOI: 10.1109/TCSVT.2016.2645723, and
- XU ZHOUBING ET AL: "Less is More: Simultaneous View Classification and Landmark Detection for Abdominal Ultrasound Images", 26 September 2018 (2018-09-26), ROBOCUP 2008: ROBOCUP 2008: ROBOT SOCCER WORLD CUP XII; [LECTURE NOTES IN COMPUTER SCIENCE; LECT.NOTES COMPUTER], SPRINGER INTERNATIONAL PUBLISHING, CHAM, PAGE(S) 711 - 719, ISBN: 978-3-319-10403-4.

The object of the present invention is to overcome the above detailed problems of the prior art, or at least to provide a useful alternative.

**SUMMARY OF THE INVENTION**

The present invention solves the above object with the subject-matter of the independent claims, and in particular, the presence of landmarks is classified within the same network and is used to strengthen the precision of the landmarks' positioning. The dependent claims comprise advantageous further embodiments. In particular, with the present invention, the focus is on training neural networks for a fully automatic positioning of landmarks and their extension to presence and precision statements.

The presence of landmarks can be defined in one or more of the following aspects: inside or outside, concealed or visible, exist or non-existing. In more detail, inside or outside means whether the landmark position coordinate is inside of the processed image or outside of the processed image. The location of landmarks that are determined to be outside of an image can be determined for example by extrapolation. As a simple example, the location of an eye that is not on the image can be determined with high probability if the other eye and the nose are on the image.

Regarding whether a landmark is visible or concealed, an example could be an ear that is covered by hair. The landmark would be inside the image, if the image shows the part of the head, but concealed. The position of the landmark could be determined, wherein the precision of the location depends on whether for example the other ear can be seen on the image as would be the case in a frontal image, or whether this is not the case if the person is shown from the side only. Another example would be an eye that is covered by opaque sunglasses.

Regarding whether the landmark exists on the image or not, an example is an image of an unrelated object, where facial features would not be existing.

Unless the context clearly requires otherwise, throughout the description and the claims, the words "comprise", "comprising", and the like are intended to be construed in an inclusive sense as opposed to an exclusive or exhaustive sense, i.e. "including, but not limited to".

## BRIEF DESCRIPTION OF THE DRAWINGS

The above, as well as additional objects, features and advantages of the present invention, will be better understood through the following illustrative and nonlimiting detailed description of embodiments of the present invention, with reference to the appended drawings, where the same reference numerals will be used for similar elements, wherein:

Fig. 1 shows simplified examples of two-dimensional and three-dimensional images;
Fig. 2 shows a neural network processing an input image and generating as output three vectors with position, precision and presence values specifying the landmarks related to the input image;
Fig. 3 shows the neural network's high-level components and connections;
Fig. 4 shows the internal structure of a sub neural network and how to extract a feature vector;
Fig. 5 shows the data flow in relation to three sub neural networks, while decoding a feature vector into landmark specifications;
Fig. 6 shows the internal structure of a sub neural network to calculate landmark positions, while factoring in landmarks' presence values;
Fig. 7 shows a loss function to compute precision loss values out of landmark positions;
Fig. 8 shows a visualization of ground truth landmark maps and example prediction maps of landmarks reflecting positions and precision;
Fig. 9 shows an extension of Figure 2 by factoring in landmarks' pre-positioning as input data;
Fig. 10 shows an extension of Figure 3 by factoring in landmarks' pre-positioning as input data;
Fig. 11 shows the internal structure of a sub neural network to calculate landmark positions, while factoring in pre-positioned landmark values;
Fig. 12 shows an extension of Figure 9 by factoring in landmarks' pre-positioning as input data in a recursive variant;
Fig. 13 shows an example of landmarks being outside of the input image, while being inside of the ground truth landmark map;
Fig. 14 shows a loss function processing landmarks data, whereby individual missing landmark elements within the landmark ground truth are ignored;
Fig. 15 shows different variants of ground truth landmarks reflected as ground truth points, ground truth lines, and/or ground truth regions.

## DETAILED DESCRIPTION

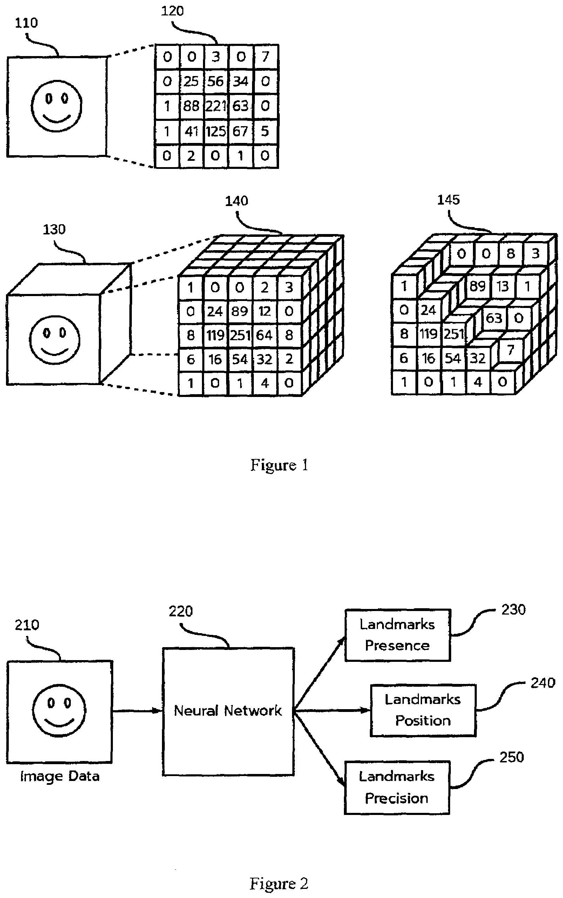

Figure 1 shows, as a simplified example, a two-dimensional 110 and three-dimensional 130 image, including an insight into the internal structure 120, 140, 145 of the images. The images show abstract faces and are intended to serve as a facial landmark demonstrator, whereby a neural network shall specify landmarks of the abstract faces. However, the landmarks can also be anatomical, fiducial, statistical, mathematical, geometrical, facial, key-point or pseudo landmarks. While the purpose and the application of the different landmarks might be different, the underlying technological structures are the same. The internal structure 120 of the two-dimensional image is represented as a two-dimensional matrix, whereby the matrix elements are called pixels and can be addressed by x and y coordinates. The internal structure 140, 145 of the three-dimensional image is represented as a three-dimensional matrix, whereby the matrix elements are called voxels and can be addressed by x, y and z coordinates. In the examples the pixels and voxels have integer values ranging from 0 to 255 for grey-scale images with a single colour channel, whereas for RGB-colour images the pixels and voxels have three channels.

It is common practice to normalize all image values to floating point values ranging from 0 to 1 or ranging from -1 to 1 before they are further processed by any neural network activity.

Image normalization function 1 [0, 1]:

$$\text{normed\_image1} = \quad (\text{image} - \text{min(image)}) \, / \, (\text{max(image)} - \text{min(image)})$$

Image normalization function 2 [-1, 1]:

$$\text{normed\_image2} = \quad 2 * \text{normed\_image1} - 1$$

Representatively, some of the other figures will use only the two-dimensional image as input data to describe the functionality and training of the neural network.

Figure 2 shows a neural network 220 processing an input image 210 and generating as output three vectors with presence value 230, position value 240, and precision value 250 specifying the landmarks in relation to the input image. In relation to the image can mean on the image and the position on the image, but it can also mean outside of the image and the position with reference to the image. In computer-aided automation systems for positioning of landmarks on images this is alternatively also referred to as location, detection, registration, tracing or recognition of landmarks. The present invention not only determines the position of the landmarks, but also provides landmarks' presence and precision values, also referred to as specifying landmarks or landmark specification hereafter. In the following the neural network will be explained in more detail with reference to the corresponding Figures.

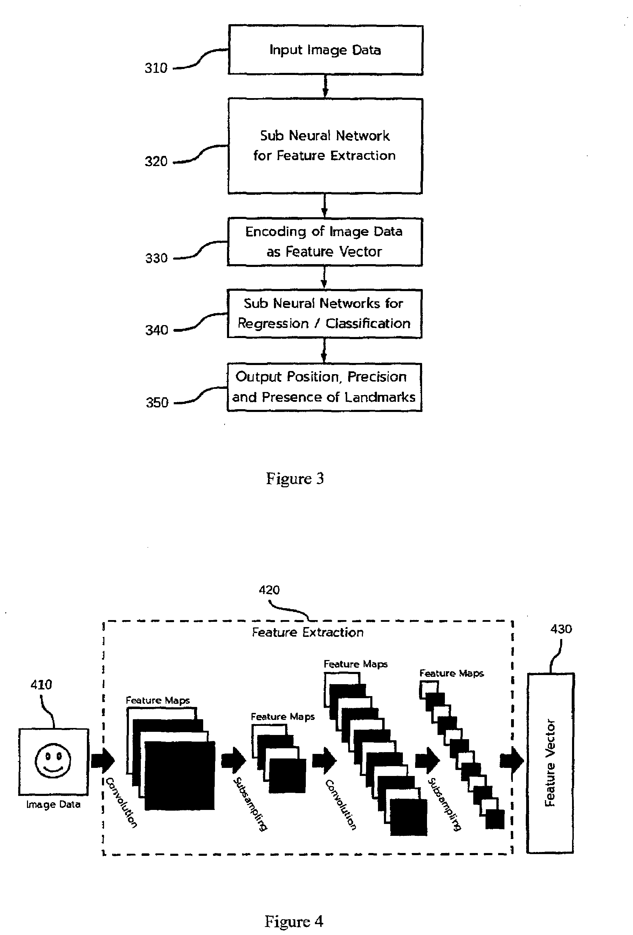

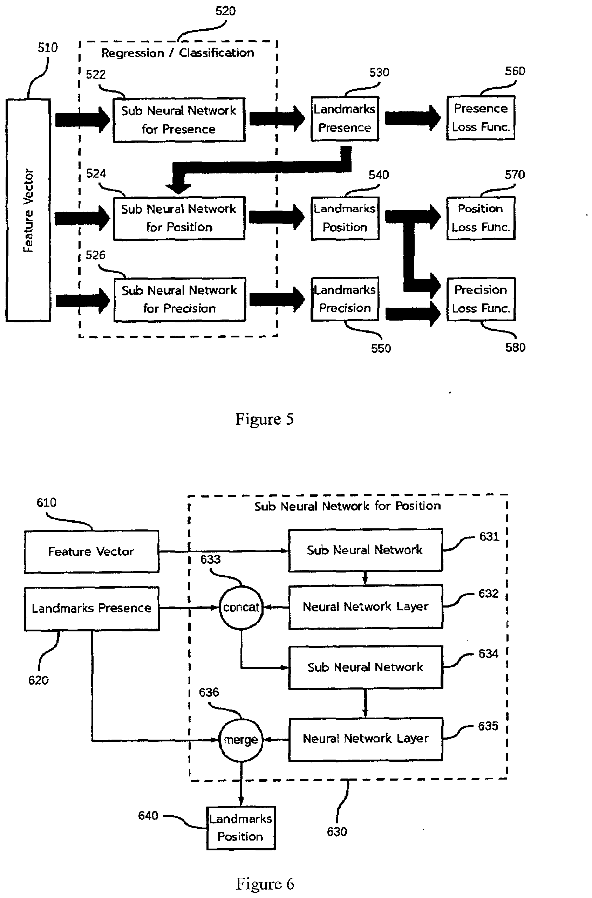

Figure 3 shows, by way of example, a neural network's high-level hidden layer components 320, 330, 340, the neural network's input 310, the neural network's aggregated output 350 and the neural network's high-level connection flow. The hidden layer components labelled with the term "sub neural network" will be used in this document to describe a set of "connected hidden neural network layers" within a neural network. A sub neural network 320 extracts image features from input image data 310 and encodes the features into a feature vector 330 as an internal intermediate result. The extraction process and the feature vector will be explained in more detail with reference to figure 4. The sub neural network 340 will decode the feature vector 330 generated by 320. The decoding process of a feature vector will be explained in more detail with reference to figures 5, 6, and 7, whereby the feature vector encodes all information to specify landmarks' presence, position and precision.

Figure 4 shows, by way of example, a sub neural network of a neural network to extract a feature vector 430 from a two-dimensional input image 410. In general, a feature is an individual measurable property or characteristic of a phenomenon being observed. Choosing informative, discriminating and independent features is a crucial step for solving classification and regression problems with neural networks. A feature vector is a vector containing multiple features. The features may represent a pixel or a whole object in an image. Examples of features are colour components, length, area, circularity, gradient magnitude, gradient direction, or simply the grey-level intensity value. What exactly a neural network considers an important feature is derived throughout learning. The convolution layers used in the feature extraction 420 find and store those features in feature maps. A certain combination of features in a certain area can signal a larger, more complex feature that exists there. A feature map can be redundant and too large to be managed efficiently. Therefore, a preliminary step in many applications of machine learning consists of subsampling feature maps by selecting a subset of features or by constructing a new and reduced set of features to facilitate learning, as well as to improve generalization and interpretability. However, this is not limiting to the invention, because to enable feature extraction from three-dimensional image data, the convolutions can be used, for example, with three-dimensional kernel filters or in combination with recurrent capabilities like long short-term memory networks.

Figure 5 shows, by way of example, the data flow in relation to three sub neural networks 522, 524, 526 of a neural network 220, 920, 1220 to decode a feature vector 510 into vectors with presence values 530, position values 540, and precision values 550. In general, there are various well-known ways how to build and train such sub neural networks (e.g. with fully-connected layers) isolated, without vertical connections indicating value input, for example from landmark presence value 530 to the sub neural network for position 524, or from landmark position values 540 to precision loss function 580. The sub neural network for presence 522, as the name implies, solves a classification problem for determining the presence of landmarks, whereby the output layer could be implemented as a sigmoid activation function returning probability values between [0, 1], whereby values closer to zero indicate a landmark might not be present on the image and values closer to one indicate a landmark might be present on the image. The output layer with the landmarks' presence values also serves as input for the sub neural network for position 524. The sub neural network for position 524, as the name implies, solves a regression problem for determining the position of landmarks, whereby the output layer could be implemented as a sigmoid activation function returning prediction values between [0, 1], whereby a value represents an element of a coordinate, whereby a value pair forms a normalized coordinate for two-dimensional images and a value triple forms a normalized coordinate for three-dimensional images. A normalized coordinate can be converted either to a pixel or voxel coordinate.

Convert normalized coordinate to pixel:

$$(x, y) = (norm\_x * image\_width, norm\_y * image\_height)$$

Convert normalized coordinate to voxel:

$$(x, y, z) = (norm\_x * image\_width, norm\_y * image\_height, norm\_z * image\_depth)$$

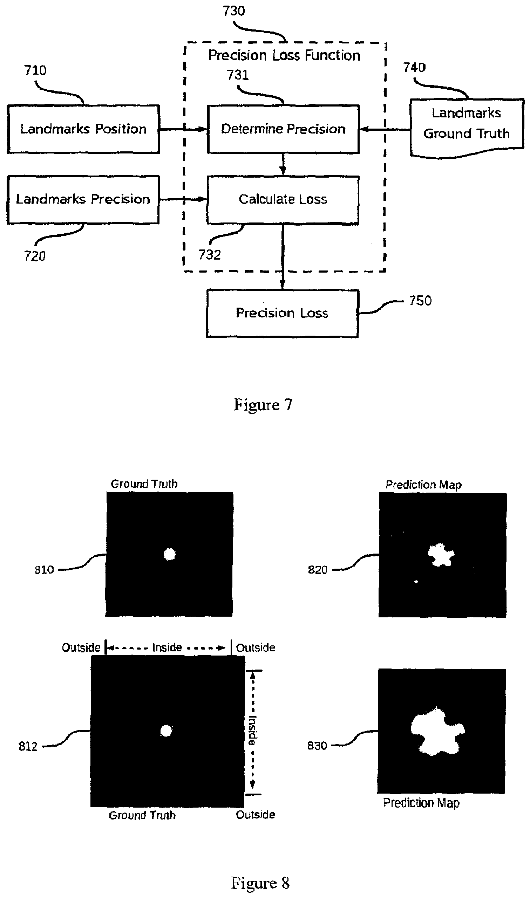

The output layer with the landmarks' position values also serves as input for the loss function 580 (see also 730 in Figure 7) of a sub neural network for precision 526. The sub neural network for precision 526, as the name implies, solves a regression problem for determining the precision of landmarks' positioning, whereby the output layer could be implemented as a sigmoid activation function returning prediction values between [0, 1], whereby a value closer to zero indicates a landmark might be imprecisely positioned on the image and a value closer to one indicates a landmark might be precisely positioned on the image. Also shown are loss functions for presence values 560 and for position values 570.

Figure 6 shows, by way of example, the internal structure of a sub neural network 630 to calculate landmark positions 640, while factoring in landmarks' presence values 633, 636. The sub neural networks 631, 634 and neural network layers 632, 635 could be implemented as fully-connected layers. Typically, the sub neural network 631 has only few layers or may not exist at all. In that case, the feature vector 610 is directly processed by the neural network layer 632. Factoring in landmarks presence values means to concatenate 633 the landmarks' presence 620 and the neural network layer 632, thereby forming a neural network layer with a layer size of the size of the landmarks presence 620 plus the size of the neural network layer 632, which is fully-connected with neural network layer 634, whereby the neural network layer 634 may profit from the additional information provided by the landmarks' presence 620. Furthermore factoring in can optionally comprise merging 636 the landmarks' presence vector 620 and the neural network layer 635 element-wise, such that the result will have the same layer size, thereby forming a neural network layer with the same layer size as the landmarks' presence vector 620 or the neural network layer 635. Within the merge process, the landmarks' presence vector's 620 values will be binarized by a threshold to zero or one values, whereby an element from the neural network layer 635 will stay unchanged, if the corresponding binarized element from the landmarks' presence 620 has a value of one, whereby an element from the neural network layer 635 will be set to a value representing undefined (e.g. -1, null, undefined, none), if the corresponding binarized element from the landmarks' presence 620 has a value of zero. It should be noted that similar processing can be applied to the precision and presence values of the landmarks.

Figure 7 shows, by way of example, a loss function 730 to compute precision loss values out of landmark positions 710 (540 in Figure 5) within the neural network training. In general, a neural network is trained to minimize the loss values, whereby the calculated output values from a neural network are computed with a priori known ground truth values 740. The ground truth values for a precision loss computation are unknown and can be determined 731 after the position of the landmarks is generated by the neural network, whereby the ground truth position 740 is used. Two examples on how to determine precisions 731 are given below.

Simple determine precisions 1, 731:

cp := calculated position values; value $\in$ [0,1]
gt := ground truth position values; value $\in$ [0,1] precisions = 1 - absolute(cp - gt)

The "simple determine precisions 1" above will get close to one for all calculated positions of the landmarks, if the corresponding neural network performs well.

Static scaled determine precision 2, 731:

cp := calculated position values; value $\in$ [0,1]
gt := ground truth position values; value $\in$ [0,1]

scale := a number greater 1 e.g. 100
precisions = 1 - max(1, scale * absolute(cp - gt))

The "static scaled determine precisions 2" above will be zero for all calculated positions of the landmarks until the scale factor is reached (for example if scale is 100, the absolute difference of cp and gt must be below 0.01 (1 percent) to reach a precision greater than zero). An appropriate scale value can be derived through heuristics. Predetermined precision values 720 can be taken into account together with the determined precision values 731 by the loss calculating 732 to calculate the precision loss.

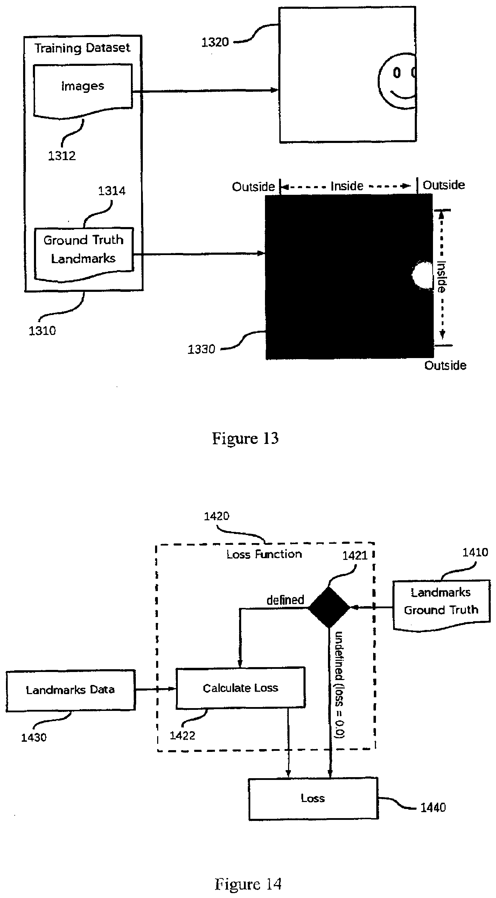

Figure 8 shows, by way of example, a visualization of ground truth landmark maps 810, 812 and example prediction maps of landmarks 820, 830 reflecting positions and precision. In the descriptions before and after (unless specifically indicated) the positions of landmarks were defined by coordinate values, whereas in this figure we use maps instead to provide a visualized representation. The sub neural networks 520 could be implemented using upsampling neural network layers. When comparing prediction maps 820 and 830, it is obvious that prediction map 820 gives a more confident landmark position than 830. The ground truth landmark map 812 shows a possible implementation of how to predict positions outside of the input image. This is described in more detail below with reference to Figure 13.

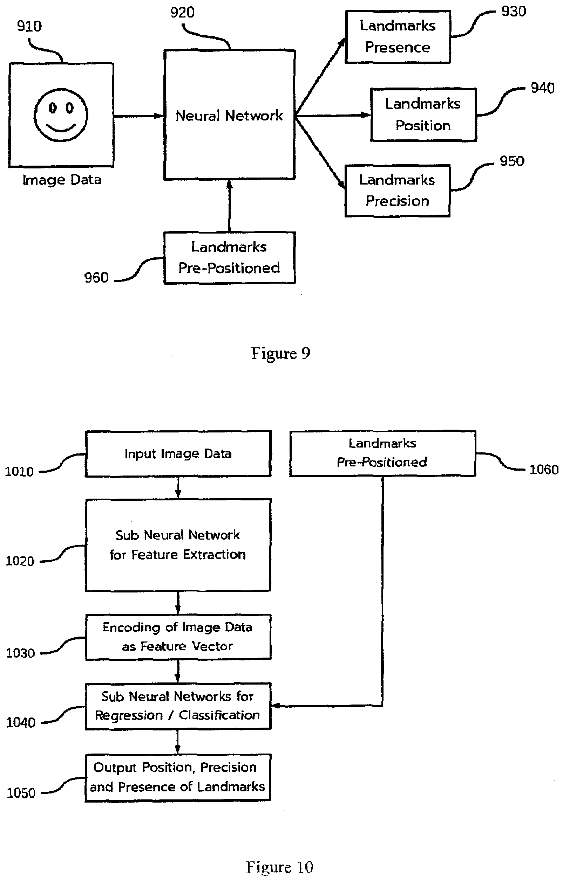

Figure 9 shows, by way of example, an extension of figure 2, whereby the neural network 920 (220 in Figure 2) factors in a set of pre-positioned landmarks 960 as additional input data, whereby pre-positioned landmarks as additional input data should be used to strengthen the neural networks' output. Pre-positioned landmarks 960 can be supplied to the neural network or generated by the neural network during a separate operation.

Figure 10 shows, by way of example, an extension of figure 3, whereby the neural network factors in a set of pre-positioned landmarks 1060 as additional input data, whereby pre-positioned landmarks as additional input data will be computed within the sub neural network 1040, whereby the input connection from 1060 to 1040 would shift to a connection from 1060 to 1020 when the pre-positioned landmarks 1060 are in map format, as can be seen in Figure 8.

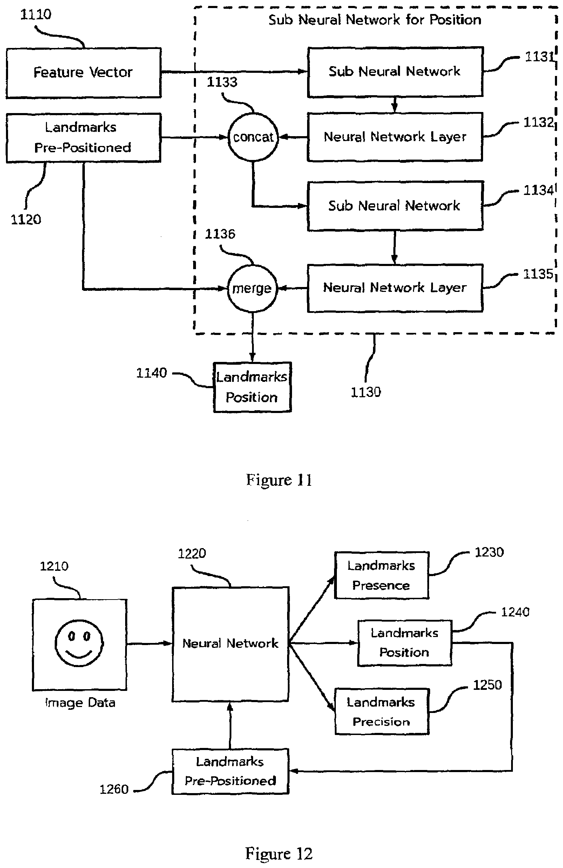

Figure 11 shows, by way of example, the internal structure of a sub neural network 1130 (524 in Figure 5) to calculate landmarks' positions 1140, while factoring in pre-positioned landmarks' values 1120, whereby figure 6 describes a similar internal structure of a sub neural network except for the merge computations 1136 (636 in Figure 6). Here the merge 1136 is optional when considering pre-positioned landmarks and it is only meaningful in case the landmarks' pre-positions 1120 exist in the generated landmarks' position 1140, too. Otherwise the merge is skipped and the neural network layer 1135 is directly connected to 1140. The landmarks' pre-position vector 1120 and the neural network layer 1135 have the same layer size and will be element-wise merged, forming a neural network layer with the same layer size as 1120 or 1135, whereby an element-wise merge will be skipped, if the landmarks' pre-position 1120 values are marked as "ignore pre-positioned" (e.g. by a negative value, like minus one), otherwise the landmarks' pre-position 1120 values will override the values from the neural network layer 1135. The remaining elements are similar to the description of Figure 6, in particular, the concatenation 1133 (633 in Figure 6). It should be noted that similar processing can be applied to the precision and presence values of the landmarks.

Figure 12 shows, by way of example, an extension of figure 9 by factoring in landmarks' pre-positioning as input data in a recursive variant, at least partly using the landmarks' position values 1240 as pre-positioned landmarks' values 1260, whereby there are multiple possibilities, which landmark positions 1240 shall be used as a recursive landmarks' pre-positioning input 1260, whereby one example would be to use all landmarks' positions 1240 without the merge 1236 within the sub neural network for position values 1230, while another example would be to choose only some landmarks' position values 1240 ruled by the landmarks' presence values 1230 and the landmarks' precision values 1250, whereby an example rule might be to choose three landmark position values 1240 with the highest landmarks' precisions values 1250 and where the landmarks' presence value 1230 must be true.

Figure 13 shows, by way of example, a position of a landmark being outside of the input image 1320, while being inside of the ground truth landmark map 1330. In the descriptions before and after (unless specifically indicated) the positions of landmarks were defined by coordinate values, whereby in this figure we use maps instead to provide a visualized representation, therefor the sub neural networks 520 could be implemented using upsampling neural network layers. An implementation example of a coordinate-based ground truth would require an update on the sub neural network for position 524, whereby the output layer has to be changed from a sigmoid activation to a linear activation (with an optional minimum and maximum output). In cases, where the presence value indicates that the landmark is located outside of the image, as can be seen on landmark map 1330, merging 636 can be ignored, in order to avoid detrimental effects on the learning success. In cases where the presence value indicates that the landmark is concealed or non-existent, merging 636 can optionally be used as described above.

Figure 14 shows, by way of example, a loss function 1420 processing landmarks' data 1430 and landmarks' ground truth data 1410, whereby individual missing (set to undefined) landmark elements within the landmark ground truth 1410 are ignored 1421, whereby the loss calculation 1422 can be arbitrary. Generally, when training neural networks, the weights in the neural network are adjusted based on the computations of a loss function, whereby individual elements of the loss functions' generated output may be zero and will not trigger updates on the neural networks' weights. The loss vector 1440 may contain zero value elements, either by a result from the loss calculation 1422 or because of missing elements within the ground truth 1410.

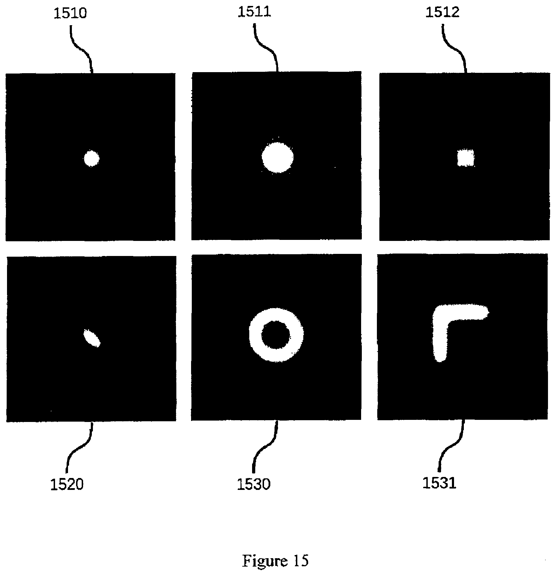

Figure 15 shows, by way of example, visualisations of different variants of ground truth landmarks reflected as ground truth points 1510, 1511, 1512, ground truth lines 1520, and/or ground truth regions 1530, 1531.

In the descriptions before and after (unless specifically indicated) the positions of landmarks were defined by coordinate values, whereby in this figure we use maps instead to provide a visualized representation, therefore the sub neural networks 520 could be implemented using upsampling neural network layers. The purpose of the ground truth examples 1510, 1511, 1512 is to position a landmark, in which a neural network is trained to minimize the distance to a specific point coordinate. The purpose of the ground truth example 1520 is to position a landmark, in which a neural network is trained to minimize the distance to a specific line (e.g. the line between two other landmarks). An example of a loss function able to process coordinate-based ground truth lines might be implemented as:

gt := coordinate-based ground truth line
a := first position vector defined in gt
b := second position vector defined in gt
p := position vector (generated by the neural network)

$$\texttt{loss = |(b - a) * p| / |p|}$$

The purpose of the ground truth examples 1530, 1531 is to position a landmark, in which a neural network is trained to minimize the distance to a specific region, which could for example be of polygon or polyhedron nature.

It will be understood that the steps of methods discussed are performed in one embodiment by an appropriate processor (or processors) of a processing (i.e., computer) system executing instructions (computer-readable code) stored in storage. It will also be understood that the invention is not limited to any particular implementation or programming technique and that the invention may be implemented using any appropriate techniques for implementing the functionality described herein. The invention is not limited to any particular programming language or operating system.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment but may. Furthermore, the particular features, structures or characteristics may be combined in any suitable manner, as would be apparent to one of ordinary skill in the art from this disclosure, in one or more embodiments.

## Claims

1. A computer-implemented method of training a neural network (220; 920; 1220) for processing a two-dimensional or three-dimensional input image (110; 210; 410; 910; 1010; 1210; 1312) and generating as output a presence vector (230), a position vector (240) and a precision vector (250), the presence vector (230), the position vector (240) and the precision vector (250) specifying landmarks related to the input image, wherein the neural network comprises a sub neural network for feature extraction (320; 420), a sub neural network for presence (522), a sub neural network for position (524) and a sub neural network for precision (526), comprising the steps of:

   extracting a feature vector (430; 510; 610; 1110) from the input image (110; 210; 310; 410; 910; 1010; 1210; 1312) with convolution based on neural network layers of the sub neural network for feature extraction (320; 420);
   decoding the feature vector (430; 510; 610; 1110) into the position vector (230), the precision vector (250), and the presence vector (230); wherein the decoding comprises:

      determining (522) the presence vector (230) by determining presence values of the landmarks with the sub neural network for presence (522),
      wherein each presence value indicates whether a respective landmark is present on the input image (110; 210; 310; 410; 910; 1010; 1210; 1312),
      wherein the presence vector (230) serves as an input for the sub neural network for position (524);
      determining the position vector (240) by determining position values of the landmarks with the sub neural network for position (524),
      wherein each position value indicates the position of a respective landmark on the input image (110; 210; 310; 410; 910; 1010; 1210; 1312),
      wherein the position vector (240) serves as an input for a precision loss function (580) of the sub neural network for precision (526);

determining the precision vector (250) by determining precision values of the landmarks with the sub neural network for precision (526),

wherein each precision value indicates the precision of the position of a respective landmark on the input image (110; 210; 310; 410; 910; 1010; 1210; 1312);

minimizing loss values with regard to ground truth landmarks (740; 810; 1314; 1410) by calculating a loss value for the presence of a respective landmark by a presence loss function, a loss value for the position of a respective landmark by a position loss function and a loss value for the precision of a respective landmark by a precision loss function,

wherein the loss values for the precision of the landmarks are computed by calculating a ground truth for each precision value of the precision vector (250) based on an absolute difference between the position of a respective landmark of the position vector (240) and a ground truth position of the same respective landmark.

2. Method according to claim 1, wherein the ground truth landmarks (740; 810; 1314; 1410) comprise at least one of ground truth points (1510, 1511, 1512), ground truth lines (1520), and ground truth regions (1530, 1531).

3. A computer program product including a program for a processing device,
comprising software code portions for performing the steps of any of claims 1 to 2 when the program is run on the processing device.

4. A computer program product according to claim 3, wherein the computer program product comprises a computer-readable medium on which the software code portions are stored, wherein the program is directly loadable into an internal memory of the processing device.

5. An apparatus, comprising means for carrying out a method according to any of claims 1 to 2.

**Patentansprüche**

1. Ein computerimplementiertes Verfahren zum Trainieren eines neuronalen Netzwerks (220; 920; 1220) zum Verarbeiten eines zweidimensionalen oder dreidimensionalen Eingabebildes (110; 210; 410; 910; 1010; 1210; 1312) und zum Erzeugen eines Präsenzvektors (230), eines Positionsvektors (240) und eines Präzisionsvektors (250), wobei der Anwesenheitsvektor (230), der Positionsvektor (240) und der Präzisionsvektor (250) Orientierungspunkte in Bezug auf das Eingabebild spezifizieren, wobei das neuronale Netz ein neuronales Teilnetz zur Merkmalsextraktion (320; 420), ein neuronales Teilnetz für Anwesenheit (522), ein neuronales Teilnetz für Position (524) und ein neuronales Teilnetz für Präzision (526) umfasst, umfassend die Schritte:

Extrahieren eines Merkmalsvektors (430; 510; 610; 1110) aus dem Eingabebild (110; 210; 310; 410; 910; 1010; 1210; 1312) mit einer Konvolution basierend auf neuronalen Netzwerkschichten des neuronalen Teilnetzwerks zur Merkmalsextraktion (320; 420);
Dekodieren des Merkmalsvektors (430; 510; 610; 1110) in den Positionsvektor (230), den Präzisionsvektor (250) und den Anwesenheitsvektor (230); wobei das Dekodieren umfasst:

Bestimmen (522) des Anwesenheitsvektors (230) durch Bestimmen von Anwesenheitswerten der Orientierungspunkte mit dem neuronalen Unternetzwerk für Anwesenheit (522),
wobei jeder Anwesenheitswert angibt, ob ein entsprechender Orientierungspunkt auf dem Eingabebild (110; 210; 310; 410; 910; 1010; 1210; 1312) vorhanden ist,
wobei der Anwesenheitsvektor (230) als Eingabe für das neuronale Teilnetzwerk für Position (524) dient;
Bestimmen des Positionsvektors (240) durch Bestimmen von Positionswerten der Orientierungspunkte mit dem neuronalen Teilnetzwerk für Position (524),
wobei jeder Positionswert die Position eines jeweiligen Orientierungspunktes auf dem Eingabebild (110; 210; 310; 410; 910; 1010; 1210; 1312) angibt,
wobei der Positionsvektor (240) als Eingabe für eine Präzisionsverlustfunktion (580) des neuronalen Teilnetzwerks für Präzision (526) dient;
Bestimmen des Präzisionsvektors (250) durch Bestimmen von Präzisionswerten der Orientierungspunkte mit dem neuronalen Teilnetzwerk für Präzision (526),
wobei jeder Präzisionswert die Präzision der Position eines jeweiligen Orientierungspunkts auf dem Eingabebild (110; 210; 310; 410; 910; 1010; 1210; 1312) angibt;

Minimierung von Verlustwerten in Bezug auf Orientierungspunkte der Grundwahrheit (740; 810; 1314; 1410) durch Berechnung eines Verlustwerts für das Vorhandensein eines jeweiligen Orientierungspunkts durch eine Anwesenheitsverlustfunktion, eines Verlustwerts für die Position eines jeweiligen Orientierungspunkts durch eine Positionsverlustfunktion und eines Verlustwerts für die Genauigkeit eines jeweiligen Orientierungspunkts durch eine Genauigkeitsverlustfunktion,

wobei die Verlustwerte für die Genauigkeit der Orientierungspunkte durch Berechnung einer Grundwahrheit für jeden Genauigkeitswert des Genauigkeitsvektors (250) auf der Grundlage einer absoluten Differenz zwischen der Position eines jeweiligen Orientierungspunkts des Positionsvektors (240) und einer Grundwahrheitsposition desselben jeweiligen Orientierungspunkts berechnet werden.

2. Verfahren nach Anspruch 1, wobei die Orientierungspunkte der Grundwahrheit (740; 810; 1314; 1410) mindestens eines der folgenden Elemente umfassen: Grundwahrheitspunkte (1510, 1511, 1512), Grundwahrheitslinien (1520) und Grundwahrheitsbereiche (1530, 1531).

3. Computerprogrammprodukt mit einem Programm für eine Verarbeitungsvorrichtung, das Softwarecodeabschnitte zum Ausführen der Schritte eines der Ansprüche 1 bis 2 umfasst, wenn das Programm auf der Verarbeitungsvorrichtung ausgeführt wird.

4. Computerprogrammprodukt nach Anspruch 3, wobei das Computerprogrammprodukt ein computerlesbares Medium umfasst, auf dem die Softwarecodeabschnitte gespeichert sind, wobei das Programm direkt in einen internen Speicher der Verarbeitungsvorrichtung geladen werden kann.

5. Vorrichtung, die Mittel zum Ausführen eines Verfahrens gemäß einem der Ansprüche 1 bis 2 umfasst.

**Revendications**

1. Une méthode informatisée d'apprentissage d'un réseau neuronal (220; 920; 1220) pour le traitement d'une image d'entrée bidimensionnelle ou tridimensionnelle (110; 210; 410; 910; 1010; 1210; 1312) et la génération en sortie d'un vecteur de présence (230), un vecteur de position (240) et un vecteur de précision (250), le vecteur de présence (230), le vecteur de position (240) et le vecteur de précision (250) spécifiant des points de repère liés à l'image d'entrée, dans lequel le réseau neuronal comprend un sous-réseau neuronal pour l'extraction de caractéristiques (320; 420), un sous-réseau neuronal pour la présence (522), un sous-réseau neuronal pour la position (524) et un sous-réseau neuronal pour la précision (526), comprenant les étapes consistant à :

extraire un vecteur de caractéristiques (430; 510; 610; 1110) de l'image d'entrée (110; 210; 310; 410; 910; 1010; 1210; 1312) avec une convolution basée sur des couches de réseau neuronal du sous-réseau neuronal pour l'extraction de caractéristiques (320; 420);

décoder le vecteur de caractéristiques (430; 510; 610; 1110) en vecteur de position (230), vecteur de précision (250) et vecteur de présence (230); dans lequel le décodage comprend :

déterminer (522) le vecteur de présence (230) en déterminant les valeurs de présence des points de repère avec le sous-réseau neuronal de présence (522),

dans lequel chaque valeur de présence indique si un repère respectif est présent sur l'image d'entrée (110; 210; 310; 410; 910; 1010; 1210; 1312),

dans lequel le vecteur de présence (230) sert d'entrée pour le sous-réseau neuronal de position (524);

déterminer le vecteur de position (240) en déterminant les valeurs de position des points de repère avec le sous-réseau neuronal de position (524),

chaque valeur de position indiquant la position d'un point de repère respectif sur l'image d'entrée (110; 210; 310; 410; 910; 1010; 1210; 1312),

dans lequel le vecteur de position (240) sert d'entrée pour une fonction de perte de précision (580) du sous-réseau neuronal de précision (526);

déterminer le vecteur de précision (250) en déterminant les valeurs de précision des points de repère avec le sous-réseau neuronal de précision (526),

dans lequel chaque valeur de précision indique la précision de la position d'un repère respectif sur l'image d'entrée (110; 210; 310; 410; 910; 1010; 1210; 1312);

minimiser les valeurs de perte par rapport aux points de repère de vérité terrain (740; 810; 1314; 1410) en calculant une valeur de perte pour la présence d'un point de repère respectif par une fonction de perte de présence, une valeur de perte pour la position d'un point de repère respectif par une fonction de perte de position et une valeur de perte pour la précision d'un point de repère respectif par une fonction de perte de précision,

dans lequel les valeurs de perte pour la précision des points de repère sont calculées en calculant une vérité terrain pour chaque valeur de précision du vecteur de précision (250) sur la base d'une différence absolue entre la position d'un point de repère respectif du vecteur de position (240) et une position de vérité terrain du même point de repère respectif.

2. Méthode selon la revendication 1, dans laquelle les points de repère de vérité terrain (740; 810; 1314; 1410) comprennent au moins l'un des éléments suivants : des points de vérité terrain (1510, 1511, 1512), des lignes de vérité terrain (1520) et des régions de vérité terrain (1530, 1531).

3. Produit logiciel comprenant un programme pour un dispositif de traitement, comprenant des portions de code logiciel pour exécuter les étapes de l'une quelconque des revendications 1 à 2 lorsque le programme est exécuté sur le dispositif de traitement.

4. Produit logiciel selon la revendication 3, dans lequel le produit logiciel comprend un support lisible par ordinateur sur lequel les portions de code logiciel sont stockées, dans lequel le programme peut être chargé directement dans une mémoire interne du dispositif de traitement.

5. Un appareil, comprenant des moyens pour mettre en oeuvre un procédé selon l'une quelconque des revendications 1 à 2.

110

120

| 0 | 0 | 3 | 0 | 7 |
|---|---|---|---|---|
| 0 | 25 | 56 | 34 | 0 |
| 1 | 88 | 221 | 63 | 0 |
| 1 | 41 | 125 | 67 | 5 |
| 0 | 2 | 0 | 1 | 0 |

140

130

| 1 | 0 | 0 | 2 | 3 |
|---|---|---|---|---|
| 0 | 24 | 89 | 12 | 0 |
| 8 | 119 | 251 | 64 | 8 |
| 6 | 16 | 54 | 32 | 2 |
| 1 | 0 | 1 | 4 | 0 |

145

Figure 1

210

220

230

240

250

Image Data

Neural Network

Landmarks Presence

Landmarks Position

Landmarks Precision

Figure 2

310 — Input Image Data

320 — Sub Neural Network for Feature Extraction

330 — Encoding of Image Data as Feature Vector

340 — Sub Neural Networks for Regression / Classification

350 — Output Position, Precision and Presence of Landmarks

Figure 3

420

Feature Extraction

410

Image Data

Feature Maps

Convolution

Feature Maps

Subsampling

Feature Maps

Convolution

Feature Maps

Subsampling

430

Feature Vector

Figure 4

Figure 5

Figure 6

730

Precision Loss Function

731

710

740

Landmarks Position

Determine Precision

Landmarks Ground Truth

Landmarks Precision

Calculate Loss

720

732

Precision Loss

750

Figure 7

Ground Truth

Prediction Map

810

820

Outside |◄ - - - - - Inside - - - - ► | Outside

Inside

812

830

Ground Truth            Outside

Prediction Map

Figure 8

Figure 9

Figure 10

1110

Feature Vector

Sub Neural Network for Position

Sub Neural Network — 1131

1133

Landmarks
Pre-Positioned

concat

Neural Network Layer — 1132

1120

Sub Neural Network — 1134

1136

merge

Neural Network Layer — 1135

1140 — Landmarks
Position

1130

Figure 11

1210

Image Data

1220

Neural Network

Landmarks
Presence — 1230

Landmarks
Position — 1240

Landmarks
Precision — 1250

1260 — Landmarks
Pre-Positioned

Figure 12

**Training Dataset**

Images

1312

1314

Ground Truth Landmarks

1310

1320

1330

Outside ← - - - - Inside - - - - → Outside

Inside

Outside

Figure 13

1420

Loss Function 1421

1410

defined

Landmarks Ground Truth

Landmarks Data

Calculate Loss

undefined (loss = 0.0)

1430

1422

Loss

1440

Figure 14

1510　　　　　　　　1511　　　　　　　　1512

1520　　　　　　　　1530　　　　　　　　1531

Figure 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Face detection based on multi task learning and multi layer feature fusion. **ZHANG YANAN et al.** 2017 6TH INTERNATIONAL CONFERENCE ON COMPUTER SCIENCE AND NETWORK TECHNOLOGY (ICCSNT). IEEE, 21 October 2017, 289-293
- **LAI HANJIANG et al.** Deep Recurrent Regression for Facial Landmark Detection. *IEEE TRANSACTIONS ON CIRCUITS AND SYSTEMS FOR VIDEO TECHNOLOGY*, 01 May 2018, vol. 28 (5), ISSN 1051-8215, DOI: 10.1109/TCSVT.2016.2645723, 1144-1157

- Less is More: Simultaneous View Classification and Landmark Detection for Abdominal Ultrasound Images. **XU ZHOUBING et al.** ROBOCUP 2008: ROBOCUP 2008: ROBOT SOCCER WORLD CUP XII; [LECTURE NOTES IN COMPUTER SCIENCE; LECT.NOTES COMPUTER. SPRINGER INTERNATIONAL PUBLISHING, 26 September 2018, 711-719